# NEUE EUROPÄISCHE PATENTSCHRIFT

(11) **EP 2 576 081 B2**
(45) Veröffentlichungstag und Bekanntmachung des Hinweises auf die Entscheidung über den Einspruch: **04.06.2025**
(45) Hinweis auf die Patenterteilung: 30.11.2016
(21) Anmeldenummer: 11723008.6
(22) Anmeldetag: 01.06.2011
(51) Int. Cl.: B05B 15/02, B05B 15/12, B08B 3/02, B05B 5/04, B05B 13/04

(54) **VORRICHTUNG, VERFAHREN UND SYSTEM ZUR AUFNAHME UND/ODER ABGABE VON ENTSORGUNGSMITTEL**
APPARATUS, METHOD AND SYSTEM FOR COLLECTING AND/OR DISPOSING OF A SOLVENT-PAINT MIXTURE
APPAREIL, METHODE ET SYSTEME DE COLLECTE ET/OU DE TRAITEMENT D'UN MELANGE DILUENT-PEINTURE

(30) Priorität: 01.06.2010 DE 102010022309
(43) Veröffentlichungstag der Anmeldung: 10.04.2013
(73) Patentinhaber: Dürr Systems AG, 74321 Bietigheim-Bissingen (DE)
(72) Erfinder: FRITZ, Hans-Georg, 73760 Ostfildern (DE); KLEINER, Marcus, 74354 Besigheim (DE); ZABEL, Michael, 71364 Winnenden (DE); WÖHR, Benjamin, 74363 Eibensbach (DE); SOMMER, Georg M., 71642 Ludwigsburg (DE); TOBISCH, Wolfgang, 70193 Stuttgart (DE); WIELAND, Dietmar, 71336 Hohenacker (DE)
(74) Vertreter: v. Bezold & Partner Patentanwälte - PartG mbB
(86) Internationale Anmeldenummer: PCT/EP2011/002727
(87) Internationale Veröffentlichungsnummer: WO 2011/151072

(56) Entgegenhaltungen:
- EP-A1- 2 140 947
- WO-A1-2011/057787
- DE-A1- 10 110 098
- DE-A1- 102004 061 322
- DE-T2- 68 927 035
- DE-T2- 69 429 088
- GB-A- 2 182 266
- JP-A- 2003 080 132
- JP-A- 2009 034 635
- US-A- 4 025 363
- US-A- 4 819 677
- US-A- 4 923 522
- US-A- 4 934 393
- US-A- 5 855 218
- US-A1- 2008 011 333
- US-A1- 2008 149 026

## Beschreibung

Die Erfindung betrifft eine Vorrichtung, ein Verfahren und ein System zum Aufnehmen bzw. Auffangen und/oder zum Abgeben bzw. Entsorgen von Entsorgungsmitteln. Die Erfindung findet insbesondere Anwendung in einer Beschichtungsanlage, vorzugsweise in einer Lackieranlage für Fahrzeuge, Kraftfahrzeugkarosseriebauteile, etc. und/oder bei Entsorgungsmitteln aus Reinigungs- und/oder Spülprozessen von Applikationsgeräten, Zerstäubern, Farbwechslern, Rückführleitungen oder andere Komponenten der Applikationstechnik.

Applikationsgeräte, wie z.B. Zerstäuber, Farbwechsler, etc. zum Beschichten von Kraftfahrzeugkarosseriebauteilen müssen in regelmäßigen Abständen gereinigt bzw. gespült werden. Ein Spülen kann erforderlich sein, um ein Ablagern von Beschichtungsmittel, z.B. von Lack, in dem Applikationsgerät zu verhindern, was ansonsten zu Funktionsbeeinträchtigungen des Applikationsgeräts führen könnte. Ferner kann ein Spülen für einen Farbwechsel erforderlich sein, um zu verhindern, dass Lackreste einer falschen Farbe den zu applizierenden Lack verunreinigen, was zu einem Qualitätsverlust des zu beschichtenden Bauteils bis hin zu dessen Unbrauchbarkeit führen kann.

Ein Teil des zur Verwendung kommenden Spülmittels (bei Lösemittel-Lacken sind das meist organische Lösemittel, bei Wasserlacken meist VE-Wasser (vollentsalztes Wasser) mit geringen Anteilen (ca. 5 - 10 %) von Butylglykol) wird dabei vorzugsweise intern über Rückführleitungen unzerstäubt abgeführt, ein Teil wird über das Applikationsgerät, z.B. die Glocke bzw. den Glockenteller eines Zerstäubers zerstäubt. Das über den Glockenteller zerstäubte Spülmittel wird bislang meist im Wesentlichen in die Kabinenluft der Lackierkabine zerstäubt und damit dem Abluftstrom zugeführt, was die negative Auswirkung hat, dass die Emissionen erhöht werden.

Zum Teil erfolgt die Spülung auch in speziellen Reinigungs-/Geräten oder -Vorrichtungen (z.B. Glockenreinigungsvorrichtungen), wie z.B. bekannt aus DE 10 2004 061 322 A1 und DE 102 40 073 A1.

Bislang treten die organischen Anteile der Spülmittel zu einem hohen Anteil als Emissionen sowohl abluftseitig als auch über das Abwasser (beim Einsatz von Nassauswaschungen) auf. Um die Emission durch die Spülmittel zu reduzieren, vorzugsweise zu vermeiden, ist es wünschenswert, einen möglichst hohen Anteil des Spülmittel-(Lack-)Gemischs abzufangen und getrennt entsorgen zu können, wie das Dokument US 4819677, das eine Vorrichtung gemäß dem Oberbegriff vom Anspruch 1 sowie ein Verfahren gemäß dem Oberbegriff vom Anspruch 8 offenbart, es beschreibt.

Für den Fall, dass eine Glockenreinigungsvorrichtung zur Verfügung steht, kann die Spülung gegebenenfalls darin erfolgen. Dies ist allerdings nur dann möglich, wenn die Taktzeit lang genug ist. Erhöhter Zeitaufwand für die Spülung entsteht dabei unter anderem durch das Herunter- und Hochfahren der Hochspannung. Außerdem ist das zielgerechte Ein- und Ausfahren in eine Glockenreinigungsvorrichtung ebenfalls mit einem erhöhten Zeitaufwand verbunden. Auch kann es dazu kommen, dass das Spülen in eine Glockenreinigungsvorrichtung zu Folgeproblemen (Feuchte- oder Lackaufbau im Glockenbereich) führt, was die Gesamtreinigungsperformance des Systems reduziert.

Bei manchen Bauarten von Lacknebelabscheidesystemen kann der kontinuierliche Eintrag von Spülmedien in das Abscheidefluid zu Funktionsbeeinträchtigungen führen.

Bei manchen Bauarten von Lacknebelabscheidesystemen kann der kontinuierliche Eintrag von Spülmedien in den Abscheidebereich zu unschöner und unerwünschter Pfützenbildung (insbesondere bei Verwendung von überwiegend wässrigen Spülmedien) führen oder durch Einfluss auf die Wechselzyklen von Hilfsstoffen die Betriebskosten des Systems erhöhen.

Zum Stand der Technik kann ferner auf die JP 2003 080 132 A und die JP 2009 034 635 A verwiesen werden.

In Anbetracht obiger Ausführungen wird es Fachleuten anhand dieser Offenbarung ersichtlich, dass ein Bedarf an der Lösung oder Überwindung oben beschriebener Probleme oder Nachteile besteht. Diese Erfindung bezieht sich auf diesen Bedarf des Standes der Technik sowie auf andere Bedürfnisse, die Fachleuten anhand dieser Offenbarung ersichtlich werden.

Die sich aus vorstehend Genanntem ergebenden Aufgaben können mit den Merkmalen der unabhängigen Ansprüche gelöst werden.

Gemäß der Erfindung wird eine Vorrichtung zum Aufnehmen bzw. Auffangen und/oder zum Abgeben bzw. Entsorgen von Entsorgungsmittel aus Reinigungs- und/oder Spülprozessen eines Applikationsgeräts vorzugsweise zur Beschichtung bzw. Lackierung von Fahrzeugen, Kraftfahrzeugkarosseriebauteilen, deren Anbauteile (z.B. Stossfänger, Spiegelgehäuse, Stossleisten), etc. bereitgestellt.

Die Vorrichtung umfasst eine Tropfenabscheidungseinrichtung, die vorgesehen ist, um das von dem Applikationsgerät abgegebene Entsorgungsmittel entgegenzunehmen und einer Tropfenabscheidung zu unterziehen.

Die Vorrichtung ist insbesondere in der Lage, einen möglichst hohen Anteil an Tropfen zu agglomerieren bzw. abzuscheiden, um sie aus dem Luft- bzw. Gasstrom entfernen zu können, und zwar vorteilhaft ohne das Strömungsfeld im Bereich des Applikationsgeräts zu beeinträchtigen.

Bei einer bevorzugten Ausführungsform ist die Anströmfläche des Tropfenabscheiders etwas größer als die entstehende Querschnittsfläche des (Entsorgungsmittel-) Sprühkegels (bei einem Abstand vom Applikationsgerät von z.B. ungefähr 200 mm bis 400 mm entspricht das ungefähr einer kreisförmigen Anströmfläche mit einem Durchmesser von ungefähr 300 mm bis 700 mm, bzw. einer quadratischen Anströmfläche mit einer Seitenlänge von ungefähr 300 mm bis 700 mm). Um den Anteil des Sprühnebels, der durch den Tropfenabscheider geführt wird, zu maximieren und/oder das Umströmen des Abscheiders zu minimieren, können auf der Anströmseite Strömungsleitbleche angebracht werden. Diese Strömungsleitbleche erzeugen eine Dynamikkomponente in Richtung des Abscheidereintritts. Beispielsweise können die Strömungsleitbleche zunächst in Verlängerung der Außenwandungen des Tropfenabscheiders im Wesentlichen parallel zur Sprühkegelachse geführt werden, wobei nach einer Strecke x (z.B. zwischen ungefähr 100 mm und 200 mm) dieses Leitblech um ungefähr 90° bis 120° nach innen zur Mittelachse des Tropfenabscheiders hin umgelenkt werden kann. Die Länge dieses Anteils nach der Umlenkung kann dabei bevorzugt ungefähr 50 mm bis 150 mm betragen.

Gemäß der Erfindung kann die Vorrichtung insbesondere eine Annahmeeinrichtung umfassen, die vorgesehen ist, um Entsorgungsmittel entgegenzunehmen und/oder abzuführen. Das Entsorgungsmittel kann z.B. das Entsorgungsmittel aus einem Applikationsgerät sein und/oder Entsorgungsmittel aus einem der Annahmeeinrichtung vorgeschalteten Aufnahmegerät für das Applikationsgerät.

Ferner ist es möglich, dass die Vorrichtung eine Saugeinrichtung umfasst, die vorgesehen ist, um zumindest einen Teil des an oder in die Annahmeeinrichtung geführten Entsorgungsmittels anzusaugen und/oder abzusaugen.

Insbesondere für den Fall, dass organische Lösemittel als Spül- bzw. Reinigungsmittel eingesetzt werden, ist ein Abscheiden derer über einen Tropfenabscheider relativ uneffektiv. Die starke Verdunstungsneigung des Mediums führt dazu, dass beim Einsprühen in den Tropfenabscheider oder auch in einen Trichter ein Großteil des Mediums verdunstet. Eine Möglichkeit, die Spülmittel zu erfassen und den Eintrag von organischen Emissionen in die Kabinenluft zu vermeiden, ist, die zerstäubten Lösemittel während des Spül- und/oder Reinigungsprozesses in bevorzugt direkter Nähe des Applikationsgeräts separat abzusaugen.

Das Applikationsgerät ist vorzugsweise ein Zerstäuber, insbesondere ein Rotationszerstäuber. Das Applikationsgerät gibt insbesondere einen zerstäubten Entsorgungsmittelsprühstrahl ab. Bevorzugt ist der von dem Applikationsgerät abgegebene Entsorgungsmittelsprühstrahl im Wesentlichen kegelförmig und/oder im Wesentlichen paraboloidförmig.

Das Entsorgungsmittel ist üblicherweise ein Gemisch aus Beschichtungsmittel wie Lack (z.B. ein Ein-Komponenten-Lack oder ein Zwei- oder Mehr-Komponenten-Lack), Spülmittel, Reinigungsmittel, Lösemittel und/oder anderen bei Reinigungs- und/oder Spülprozessen von Applikationsgeräten anfallenden Mitteln. Bei dem Entsorgungsmittel kann es sich aber auch um im Wesentlichen reines Beschichtungsmittel (z.B. reinen Ein-Komponenten-, Zwei-Komponenten- oder MehrKomponenten-Lack) oder um im Wesentlichen reines Spül-, Reinigungs- und/oder Lösemittel handeln. Das Entsorgungsmittel ist insbesondere ein zerstäubtes Entsorgungsmittel. Das Entsorgungsmittel wird vorzugsweise in zerstäubter Form (also vorzugsweise als zerstäubter Entsorgungsmittelsprühstrahl) der Abscheidungseinrichtung und/oder Annahmeeinrichtung oder dem weiter unten erwähnten Reinigungsgerät für das Applikationsgerät zugeführt. Das Entsorgungsmittel kann unzerstäubt sein. Insbesondere wird das Entsorgungsmittel von dem Applikationsgerät als ein zerstäubter Entsorgungsmittelsprühstrahl abgegeben. Ferner ist es möglich, dass das Entsorgungsmittel als Entsorgungsmittelnebel vorliegt. Das Entsorgungsmittel kann organische Bestandteile, insbesondere organisches Lösemittel umfassen oder organisches Lösemittel sein.

Die Abscheidungseinrichtung umfasst einen Tropfenabscheider und eine Strömungsleiteinrichtung (insbesondere mit Strömungsleitblechen).

Die Strömungsleiteinrichtung ist vorgesehen, um das aus dem Applikationsgerät abgegebene Entsorgungsmittel zu dem Tropfenabscheider zu lenken und/oder um eine Dynamikkomponente in Richtung des Tropfenabscheiders zu erzeugen. Im montierten Zustand bzw. während eines Reinigungs- und/oder Spülprozesses ist die Strömungsleiteinrichtung vorzugsweise koaxial über dem Tropfenabscheider bzw. auf der Anströmseite des Tropfenabscheiders angeordnet und mit diesem verbunden. Bevorzugt sind der Tropfenabscheider und die Strömungsleiteinrichtung aneinander befestigt bzw. aneinander befestigbar und bilden insbesondere eine kompakte Einheit. Die Strömungsleiteinrichtung ist insbesondere vorgesehen, um den Anteil des (Entsorgungsmittel-) Sprühnebels, derdurch den Abscheider geführt wird, zu maximieren und/oder das Umströmen des Abscheiders zu minimieren.

Gemäß der Erfindung umfasst die Strömungsleiteinrichtung einen sich zum Tropfenabscheider hin verjüngenden ersten Abschnitt. Insbesondere ist während des Reinigungs- und/oder Spülprozesses des Applikationsgeräts der erste Abschnitt dem Applikationsgerät zugewandt bzw. zum Applikationsgerät hin aufweitend. Ferner kann die Strömungsleiteinrichtung z.B. einen in Verlängerung der Außenwandung des Tropfenabscheiders vorzugsweise im Wesentlichen parallel verlaufenden zweiten Abschnitt umfassen.

Bevorzugt gehen der erste Abschnitt und der zweite Abschnitt der Strömungsleiteinrichtung ineinander über bzw. sind ein einteiliges bzw. integrales Teil. Beispielsweise kann der erste Abschnitt nach innen zu der Mittelachse des Tropfenabscheiders und/oder der Strömungsleiteinrichtung um einen Winkel von größer ungefähr 90°, 100°, 110°, 120°, 130° oder 140°, und/oder von kleiner ungefähr 95°, 105°, 115°, 125°, 135° oder 145° umgelenkt sein. Ferner kann der zweite Abschnitt eine Länge aufweisen von größer ungefähr 50mm, 100mm, 150mm, 200mm oder 250mm und/oder von kleiner ungefähr 75mm, 125mm, 175mm, 225mm oder 275mm, wohingegen der erste Abschnitt (nach der Umlenkung) z.B. eine Länge aufweisen kann von größer ungefähr 25mm, 75mm, 125mm, 175mm oder 225mm, und/oder kleiner ungefähr 50mm, 100mm, 150mm, 200mm oder 250mm.

Die Abscheidungseinrichtung ist vorgesehen, um das von dem Applikationsgerät abgegebene Entsorgungsmittel entgegenzunehmen und einer Prallabscheidung zu unterziehen, wobei der (Tropfen-) Abscheider dann als Prallabscheider ausgebildet ist. Der Prallabscheider kann z.B. eine Vielzahl von Abscheideprofilen umfassen, durch die das Entsorgungsmittel mehrfach umgelenkt wird und gegen Prallflächen trifft, wodurch sich ein Film aus Entsorgungsmittel an den Prallflächen bildet, der vorzugsweise aufgrund Schwerkraft nach unten abfließt. Die Abscheideprofile können z.B. nach unten weisende Ausformungen aufweisen, um das Ablaufen des Films zu begünstigen und/oder um zu vermeiden, dass bereits abgeschiedene Tropfen wieder vom Gas-/Luftstrom erfasst werden. Die Abscheidungseinrichtung ist insbesondere zur vertikalen Beaufschlagung von oben ausgebildet.

Gemäß einer ersten erfindungsgemäßen Variante ist die Anströmfläche der Strömungsleiteinrichtung und vorzugsweise des Tropfenabscheiders bemessen, um den Entsorgungsmittelsprühstrahl aus dem Applikationsgerät im Wesentlichen vollständig aufzunehmen. Insbesondere kann die Anströmfläche zumindest geringfügig größer sein als die (vorzugsweise beim Eintreffen an der Anströmfläche) entstehende Querschnittsfläche des Entsorgungsmittelsprühstrahls (der meist im Wesentlichen kegel- und/oder paraboloidförmig ausgebildet sein wird).

Beispielsweise ist es möglich, dass die Abscheidungseinrichtung über einem Beschichtungskabinenboden, insbesondere über einem darin ausgebildeten Durchlass, angeordnet ist. Ferner ist es möglich, dass die Annahmeeinrichtung unter dem Beschichtungskabinenboden, insbesondere unter dem darin ausgebildeten Durchlass, angeordnet ist. Es ist auch möglich, dass die Abscheidungseinrichtung unter dem Beschichtungskabinenboden angeordnet ist. Der Beschichtungskabinenboden kann z.B. ein Gitterrost sein. Der Beschichtungskabinenboden ist vorzugsweise ein Beschichtungskabinenboden einer Beschichtungsanlage für Kraftfahrzeugkarossen und/oder deren Anbauteilen.

Gemäß einer zur ersten Variante alternativen oder ergänzenden zweiten erfindungsgemäßen Variante ist die Anströmfläche des Tropfenabscheiders so ausgestaltet, dass ein Rückprall des aus dem Applikationsgerät abgegebenen Entsorgungsmittels reduziert oder vermieden wird. Dazu ist die freie Fläche des Tropfenabscheiders, insbesondere die freie Fläche der Anströmfläche angemessen groß, um einen Rückprall des Entsorgungsmittels zu vermeiden.

Die Vorrichtung umfasst vorzugsweise eine Annahmeeinrichtung, die vorgesehen ist, um das einer (Tropfen-) Abscheidung unterzogene Entsorgungsmittel von Abscheidungseinrichtung anzunehmen und/oder abzuführen. Insbesondere ist der Auslass des Tropfenabscheiders vorgesehen, das der Tropfenabscheidung unterzogene Entsorgungsmittel in die Einlassöffnung der Annahmeeinrichtung zu führen.

Bei einer Ausführungsform ist die Annahmeeinrichtung ein trichterförmiges Sammelelement, z.B. mit im Wesentlichen kreisrundem, rechteckförmigen oder quadratischem Querschnitt, das z.B. eine Einlassöffnung und eine Auslassöffnung für das Entsorgungsmittel aufweist.

Es ist möglich, dass die Einlassöffnung und die Auslassöffnung der Annahmeeinrichtung dieselbe Öffnung sind, d.h. das Entsorgungsmittel kann über dieselbe Öffnung abgeführt werden, über die es in die Annahmeeinrichtung eingebracht wurde.

Die Abscheidungseinrichtung ist vorzugsweise vorgesehen, um während des Reinigungs- und/oder Spülprozesses des Applikationsgeräts bzw. im montierten Zustand der Vorrichtung einen axialen Abstand zu dem Applikationsgerät, insbesondere dessen Absprühelement (z.B. eine Düse, ein Glockenteller, etc.), und einen axialen Abstand zu der Annahmeeinrichtung, insbesondere deren Einlassöffnung, aufzuweisen. Insbesondere ist die Abscheidungseinrichtung vorgesehen, um vorzugsweise beabstandet über der Annahmeeinrichtung, vorzugsweise über der Einlassöffnung der Annahmeeinrichtung positioniert zu werden.

Während des Reinigungs- und/oder Spülprozesses des Applikationsgeräts bzw. im montierten Zustand der Vorrichtung ist die Abscheidungseinrichtung insbesondere im Wesentlichen koaxial (beabstandet) über der Annahmeeinrichtung angeordnet, wobei das Applikationsgerät bzw. das Absprühelement des Applikationsgeräts (z.B. eine Düse, ein Glockenteller, etc.) bevorzugt im Wesentlichen koaxial (beabstandet) über der Tropfenabscheidungseinrichtung zu positionieren ist.

Die Abscheidungseinrichtung, insbesondere die Anströmfläche des Tropfenabscheiders, ist bevorzugt vorgesehen, einen axialen Abstand von dem Applikationsgerät, insbesondere dem Absprühelement des Applikationsgeräts (z.B. eine Düse, ein Glockenteller, etc.) aufzuweisen, wenn der Reinigungs- und/oder Spülprozess durchgeführt wird bzw. im montierten Zustand der Vorrichtung. Dabei kann der Abstand größer sein als ungefähr 100mm, 200mm, 300mm, 400mm, 500mm oder 600mm und/oder kleiner sein als ungefähr 150mm, 250mm, 350mm, 450mm, 550mm oder 650mm.

Der Tropfenabscheider hat vorzugsweise eine Höhe von größer ungefähr 75mm, 125mm, 175mm, 225mm, 275mm oder 325mm und/oder von kleiner ungefähr 100mm, 150mm, 200mm, 250mm, 300mm oder 350mm.

Im montierten Zustand der Vorrichtung bzw. während eines Spül- und/oder Reinigungsprozesses ist es insbesondere möglich, dass
a) zwischen der Anströmfläche bzw. dem Einlass des Tropfenabscheiders und dem Applikationsgerät (insbesondere dem Absprühelement), und/oder
b) zwischen der Anströmfläche bzw. dem Einlass der Strömungsleiteinrichtung und dem Applikationsgerät (insbesondere dem Absprühelement); und/oder
c) zwischen dem Auslass des Tropfenabscheiders und der Einlassöffnung der Annahmeeinrichtung bzw. zwischen der Annahmeeinrichtung und der Abscheidungseinrichtung ein jeweiliger axialer Abstand ausgebildet wird, der größer ist als ungefähr 50mm, 100mm, 150mm, 200mm, 250mm, 300mm, 350mm, 400mm, 450mm, 500mm oder 550mm, und/oder kleiner ist als ungefähr 75mm, 125mm, 175mm, 225mm, 275mm, 325mm, 375mm, 425mm, 475mm, 525mm oder 575mm. Die jeweiligen Abstände können gleich groß sein oder unterschiedlich groß.

Die Strömungsleiteinrichtung und/oder der Tropfenabscheider kann einen Einlass bzw. eine Anströmfläche für das aus dem Applikationsgerät abgegebene Entsorgungsmittel umfassen, wobei der Tropfenabscheider einen Auslass für das einer Tropfenabscheidung unterzogene Entsorgungsmittel aufweisen kann.

Die Annahmevorrichtung kann einen zylinderförmigen und/oder trichterförmigen ersten Körper, einen zylinderförmigen und/oder trichterförmigen zweiten Körper und/oder einen zylinderförmigen und/oder trichterförmigen dritten Körper umfassen, deren jeweiliger Querschnitt z.B. kreisförmig, rechteckförmig oder quadratisch ausgebildet sein kann.

Der erste Körper kann z.B. eine Länge aufweisen von größer ungefähr 200mm, 250mm, 300mm, 350mm, 400mm, 450mm oder 500mm und/oder von kleiner 225mm, 275mm, 325mm, 375mm, 425mm, 475mm oder 525mm. Der zylindrische erste Körper hat vorzugsweise einen Durchmesser von ungefähr 25mm, 75mm, 125mm, 175mm oder 225mm und/oder von kleiner ungefähr 50mm, 100mm, 150mm, 200mm oder 250mm.

Der dritte Körper kann z.B. einen Durchmesser aufweisen, insbesondere einen maximalen Durchmesser bei der trichterförmigen Ausgestaltung von größer ungefähr 300mm, 350mm, 400mm, 450mm, 500mm, 550mm oder 600mm und/oder von kleiner ungefähr 325mm, 375mm, 425mm, 475mm, 525mm, 575mm oder 625mm.

Der zylindrische Teil des zweiten Körpers kann eine Länge aufweisen von größer ungefähr 250mm, 300mm, 350mm, 400mm, 450mm, 500mm, 550mm oder 600mm und/oder von kleiner ungefähr 275mm, 325mm, 375mm, 425mm, 475mm, 525mm, 575mm oder 625mm.

Ferner kann die Annahmeeinrichtung zumindest eine Einlassöffnung, um das Entsorgungsmittel einzubringen, und/oder zumindest eine Auslassöffnung, um das Entsorgungsmittel abzuführen, aufweisen.

Es ist möglich, dass die zumindest eine Einlassöffnung vorgesehen ist, um das Entsorgungsmittel in den ersten Körper und/oder den dritten Körper einzubringen, und/oder, um das Entsorgungsmittel in einen Zwischenraum zwischen dem ersten Körper und dem dritten Körper einzubringen. Die Ausslassöffnung ist vorzugsweise an dem zweiten Körper vorgesehen, um das Entsorgungsmittel z.B. in eine Abführleitung abzuführen, die das Entsorgungsmittel vorzugsweise in einen Sammeltank leitet.

Der dritte Körper kann einen größeren Durchmesser aufweisen als der erste Körper, wobei der zweite Körper zumindest abschnittsweise einen größeren Durchmesser aufweisen kann als der erste Körper und/oder der dritte Körper. Der dritte Körper wiederum kann zumindest teilweise den ersten Körper umgeben, um einen Zwischenraum zwischen dem dritten Körper und dem ersten Körper zu bilden. Es ist auch möglich, dass der zweite Körper zumindest teilweise den ersten Körper und/oder den dritten Körper umgibt, z.B. um einen Zwischenraum zwischen dem zweiten Körper und dem ersten Körper und/oder dem dritten Körper zu bilden. Ferner ist es möglich, dass der erste Körper und der zweite Körper voneinander beabstandet sind, um einen Zwischenraum zwischen dem ersten Körper und dem zweiten Körper zu bilden.

Insbesondere kann die Annahmeeinrichtung einen vorzugsweise umlaufenden Ringspalt umfassen, vorzugsweise ausgebildet durch den ersten Körper und den dritten Körper. Der Ringspalt kann eine Breite aufweisen von z.B. größer als ungefähr 2,5mm; 7,5mm; 12,5mm; 17,5mm; 22,5mm; 27,5mm oder 32,5mm, und/oder von kleiner als ungefähr 5mm; 10mm; 15mm; 20mm; 25mm; 30mm oder 35mm. Dabei wird insbesondere der erste Körper zylinderförmig und der dritte Körper trichterförmig vorgesehen, wobei der Ringspalt zwischen dem zylinderförmigen ersten Körper und dem vorzugsweise im Wesentlichen kleinsten Durchmesser des dritten Körpers (d.h. im montierten Zustand der Vorrichtung der unterste Abschnitt des dritten Körpers) ausgebildet wird. Es ist möglich, dass durch den Ringspalt zumindest ein Teil des an oder in die Annahmeinrichtung (insbesondere den dritten Körper) geführten Entsorgungsmittels zu der Auslassöffnung der Annahmeeinrichtung geführt wird und/oder zumindest ein Teil des an oder in die Annahmeinrichtung (insbesondere den dritten Körper) geführten Entsorgungsmittels (vorzugsweise nach unten und/oder zur Seite) an- bzw. abgesaugt wird.

Die Annahmeeinrichtung, die zumindest eine Einlassöffnung der Annahmeeinrichtung, die Auslassöffnung der Annahmeeinrichtung, der erste Körper, der zweite Körper, der dritte Körper, die Strömungsleiteinrichtung, der Tropfenabscheider und/oder das Applikationsgerät sind während des Reinigungs- und/oder Spülprozess des Applikationsgeräts bzw. im montierten Zustand der Vorrichtung vorzugsweise im Wesentlichen koaxial zueinander angeordnet.

Die Vorrichtung kann ein Aufnahmeteil bzw. ein Reinigungsgerät umfassen, das vorgesehen ist, das Applikationsgerät zu reinigen und/oder das von dem Applikationsgerät abgegebene Entsorgungsmittel entgegenzunehmen und das Entsorgungsmittel an die Annahmeeinrichtung abzugeben. Als Reinigungsgerät kann insbesondere das Reinigungsgerät wie offenbart in Dokument DE 10 2004 061 322 A1 und/oder die Reinigungsvorrichtung wie offenbart in DE 102 40 073 A1 eingesetzt werden, deren Offenbarungen der vorliegenden Offenbarung in vollem Umfang zuzurechnen sind.

Die Saugeinrichtung kann eine Saugleistung bzw. einen Luftvolumenstrom aufweisen von größer ungefähr 5m³/h, 25m³/h, 75m³/h, 125m³/h, 175m³/h, 225m³/h oder 275m³/h; und/oder von kleiner ungefähr 50m³/h, 100m³/h, 150m³/h, 200m³/h, 250m³/h oder 300m³/h.

Die Saugeinrichtung kann ein Absaugrohr umfassen. Die Annahmeeinrichtung kann eine Anschlussöffnung umfassen, vorzugsweise angeordnet an einer Seitenwand der Annahmeeinrichtung, insbesondere an dem zweiten Körper, mit der das Absaugrohr verbindbar ist. Das Absaugrohr mündet vorzugsweise in den Zwischenraum zwischen erstem Körper und zweitem Körper, wobei die Anschlussöffnung vollständig oder teilweise der Seitenwand des ersten Körpers gegenüberstehen kann. Die Anschlussöffnung ist bevorzugt zwischen der zumindest einen Einlassöffnung und der Auslassöffnung der Annahmeeinrichtung angeordnet.

Absaugrohr hat vorzugsweise einen Durchmesser von ungefähr 25mm, 75mm, 125mm, 175mm oder 225mm und/oder von kleiner ungefähr 50mm, 100mm, 150mm, 200mm oder 250mm.

Die Saugeinrichtung kann einen Absaugtrakt, umfassend das Absaugrohr, aufweisen, der mit einer Partikelabscheidungseinrichtung (z.B. ein oder mehrere Filter) versehen ist. Dies ist vorteilhaft, da im Spülmittel auch Lackanteile enthalten sein können.

Bei der Ausführungsform, bei der ein Aufnahmeteil bzw. ein Reinigungsgerät der Annahmevorrichtung vorgeschaltet wird, ist es möglich, dass ein zu reinigender Abschnitt eines Applikationsgeräts (z.B. ein Sprühkopf bzw. ein Glockenteller) in dem Reinigungsgerät positioniert und gereinigt wird und/oder das Applikationsgerät das Entsorgungsmittel in das Reinigungsgerät abgibt. Das in dem Reinigungsgerät anfallende Entsorgungsmittel kann dann an die Annahmeeinrichtung weitergeleitet werden.

Gemäß der Erfindung wird auch ein Verfahren zum Aufnehmen bzw. Auffangen und/oder zum Abgeben bzw. Entsorgen von Entsorgungsmittel aus Reinigungs- und/oder Spülprozessen eines Applikationsgeräts bereitgestellt, vorzugsweise durchgeführt mit einer Vorrichtung wie hierin beschrieben.

Bei dem Verfahren gemäß der Erfindung gibt das Applikationsgerät das Entsorgungsmittel in eine Abscheidungseinrichtung ab, wobei das Entsorgungsmittel in der Abscheidungseinrichtung einer Abscheidung unterzogen wird.

Entsorgungsmittel aus dem Applikationsgerät kann an oder in eine Annahmeeinrichtung abgegeben werden und eine Saugeinrichtung zumindest einen Teil des Entsorgungsmittels ansaugt und/oder absaugt. Es ist insbesondere vorteilhaft, das zerstäubte Entsorgungsmittel bzw. das zerstäubte Lösemittel während eines Spül- und/oder Reinigungsprozesses in vorzugsweise direkter Nähe des Applikationsgeräts an- bzw. abzusaugen. Insbesondere umfasst hierbei das Entsorgungsmittel organische Bestandteile, vorzugsweise organische Spül- und/oder Reinigungsmittel, insbesondere organische Lösemittel.

Ferner ist es möglich, dass bei dem Verfahren gemäß der Erfindung das von dem Applikationsgerät abgegebene Entsorgungsmittel während des Reinigungs- und/oder Spülprozesses einer elektrostatischen Spannungsaufladung unterworfen und in eine Annahmeeinrichtung abgegeben wird. Beim Spülvorgang ohne Hochspannung ist dieser Vorgang wenig effektiv, da durch die fehlende elektrostatische Abscheidewirkung nur ein geringer Anteil der Spülflüssigkeitstropfen in der Annahmeeinrichtung verbleibt. Der wesentliche Anteil an Flüssigkeit wird mit der meist vorgesehenen Lenkluft samt injizierter Kabinenluft im Rückstoß aus der Annahmeeinrichtung in die Abluft geführt.

Es ist möglich, dass das Applikationsgerät über, vorzugsweise beabstandet über der Annahmeeinrichtung positioniert wird.

Ferner ist es möglich, dass das Applikationsgerät das Entsorgungsmittel in die Annahmeeinrichtung, insbesondere in den ersten Körper bzw. ein Innenrohr, ausgibt, und/oder dass das Applikationsgerät zumindest abschnittsweise in der Annahmeeinrichtung, insbesondere in dem ersten Körper bzw. dem Innenrohr, positioniert wird. Vorzugweise ist das Applikationsgerät ein Zerstäuber, wobei dessen Glockenteller in der Annahmeeinrichtung, insbesondere dem ersten Körper positioniert wird.

Das Entsorgungsmittel, das vorzugsweise zerstäubt ist und/oder ein organisches oder zumindest organische Bestandteile umfassendes Reinigungs-/Spülmittel (vorzugsweise Lösemittel) sein kann, kann zumindest teilweise in der Annahmeeinrichtung agglomeriert werden.

Es ist möglich, dass der flüssige Teil bzw. die Flüssigphase des Entsorgungsmittels (z.B. durch ein Innenrohr bzw. den ersten Körper) im Wesentlichen nach unten (z.B. zu der Auslassöffnung der Annahmeeinrichtung) abgeführt wird. Ferner ist es möglich, dass der gasförmige Teil bzw. die Gasphase des Entsorgungsmittels mittels der Saugeinrichtung im Wesentlichen seitlich abgesaugt wird.

Insbesondere kann das Applikationsgerät in einem der Annahmeeinrichtung vorgeschalteten Aufnahmeteil bzw. Reinigungsgerät gereinigt werden, wobei es auch möglich ist, dass das Applikationsgerät das Entsorgungsmittel in das Aufnahmeteil bzw. das Reinigungsgerät abgibt. Es ist möglich, dass das Reinigungsgerät vorzugsweise beabstandet über der Annahmeeinrichtung positioniert wird.

Es ist möglich, dass vorzugsweise zerstäubtes Entsorgungsmittel (z.B. zerstäubtes vorzugsweise organisches Lösemittel) von dem Reinigungsgerät an oder in die Annahmeeinrichtung, insbesondere den dritten Körper geführt wird.

Vorzugsweise wird der flüssige Teil bzw. die Flüssigphase des Entsorgungsmittels einem trichterförmigen Körper (z.B. der dritte Körper) der Annahmeeinrichtung zugeführt und/oder über einen Ringspalt (z.B. zwischen dem ersten Körper und dem dritten Körper) in der Annahmeeinrichtung zu der Auslassöffnung der Annahmeeinrichtung geführt.

Es ist möglich, dass das von dem Reinigungsgerät abgegebene zerstäubte und/oder unzerstäubte Entsorgungsmittel (z.B. zerstäubtes vorzugsweise organisches Lösemittel) mittels der Saugeinrichtung nach unten und/oder zumindest teilweise zur Seite angesaugt und/oder abgesaugt wird.

Weitere Verfahrensschritte ergeben sich unmittelbar aus der Beschreibung der Vorrichtung, insbesondere aus der Funktionalität der Vorrichtung.

Gemäß der Erfindung wird auch ein Entsorgungssystem für Entsorgungsmittel aus Reinigungs- und/oder Spülprozessen eines Applikationsgeräts bereitgestellt, das eine Vorrichtung wie hierin offenbart umfasst. Das Entsorgungssystem umfasst auch eine Abführleitung, die vorgesehen ist, um das Entsorgungsmittel von der Annahmeeinrichtung zu einem Sammeltank abzuführen.

Das Entsorgungssystem ist insbesondere ein Entsorgungssystem für eine Beschichtungsanlage (z.B. Lackieranlage) für Fahrzeuge, vorzugsweise Kraftfahrzeugkarosseriebauteile.

Die Annahmeeinrichtung kann im Wesentlichen unter einem Gitterrost und/oder unterhalb eines Gitterrost-Niveaus des Entsorgungssystems positioniert werden, vorzugsweise in Reichweite eines Lackierroboters.

Es ist möglich, dass ein Teil der Annahmeeinrichtung, insbesondere des ersten Körpers in dem Gitterrost angeordnet ist und/oder über den Gitterrost hinausragt bzw. durch diesen hindurchgeführt ist, wozu der Gitterrost eine entsprechend vorgesehene Öffnung aufweisen kann. Der Gitterrost kann insbesondere eine Öffnung aufweisen, die so vorgesehen ist, dass zumindest eine Einlassöffnung der Annahmeeinrichtung freigelegt wird, um das Applikationsgerät zumindest teilweise in der Öffnung des Gitterrosts und/oder der Einlassöffnung und/oder der Annahmeeinrichtung positionieren zu können.

Ferner kann der zweite Körper und/oder der dritte Körper unter dem Gitterrost angeordnet werden.

Es ist aber auch möglich, dass das Applikationsgerät das Entsorgungsmittel durch den Gitterrost per se der Annahmeeinrichtung zuführt.

Der Gitterrost kann im Rahmen der Erfindung auch irgendeine andere Bodenausführung sein, die zweckmäßig einen Durchlass aufweist, insbesondere ein Beschichtungskabinenboden einer Beschichtungsanlage für Kraftfahrzeugkarosserien und/oder deren Anbauteilen.

Mittels der erfindungsgemäßen Vorrichtung kann das Entsorgungsmittel auf vorteilhafte Art und Weise einfach aufgefangen und/oder abgegeben bzw. entsorgt werden, um z.B. Emissionen und Pfützenaufbau zu vermeiden. Ferner kann insbesondere organisches Entsorgungsmittel, insbesondere zerstäubtes organischer Entsorgungsmittelnebel aufgefangen werden, um diesen gegebenenfalls nicht erst über die Kabinenluft zu verdünnen, sondern gezielt separat einer Nachverbrennung zuzuführen.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert. Es zeigen:
- Figur 1a: eine Vorrichtung gemäß einem ersten Ausführungsbeispiel der Erfindung;
- Figur 1b: eine Draufsicht auf eine Strömungsleiteinrichtung und einen Tropfenabscheider gemäß Figur 1a;
- Figur 2: eine Vorrichtung gemäß einem zweiten Ausführungsbeispiel der Erfindung, bei der das Entsorgungsmittel mittels eines beispielhaften erfindungsgemäßen Verfahrens in die und/oder aus der Annahmeeinrichtung geführt wird;
- Figur 3: eine Vorrichtung gemäß Figur 2, bei der das Entsorgungsmittel mittels eines anderen beispielhaften erfindungsgemäßen Verfahrens in die und/oder aus der Annahmeeinrichtung geführt wird;
- Figur 4: einen Teil eines Entsorgungssystems und ein Applikationsgerät während eines Reinigungs/Spülprozesses gemäß einem Ausführungsbeispiel der Erfindung, wobei das Entsorgungsmittel mittels eines wiederum anderen beispielhaften erfindungsgemäßen Verfahrens zu der und/oder in die Annahmeeinrichtung geführt wird; und
- Figur 5: ein Flussdiagramm eines Verfahrens, das bei der Vorrichtung gemäß Figur 1a durchführbar ist;
- Figur 6: ein Flussdiagramm eines Verfahrens, das bei der Vorrichtung gemäß Figur 2 durchgeführt werden kann;
- Figur 7: ein Flussdiagramm eines anderen Verfahrens, das bei der Vorrichtung gemäß Figur 2 bzw. Figur 3 durchgeführt werden kann;
- Figur 8: ein Flussdiagramm eines wiederum anderen Verfahrens, das bei einer Vorrichtung gemäß Figur 4 durchgeführt werden kann;
- Figur 9: eine perspektivische Draufsicht auf die in den Figuren 1a, 1b gezeigte Vorrichtung; und
- Figur 10: eine perspektivische Unteransicht auf die in den Figuren 1a, 1b gezeigte Vorrichtung.

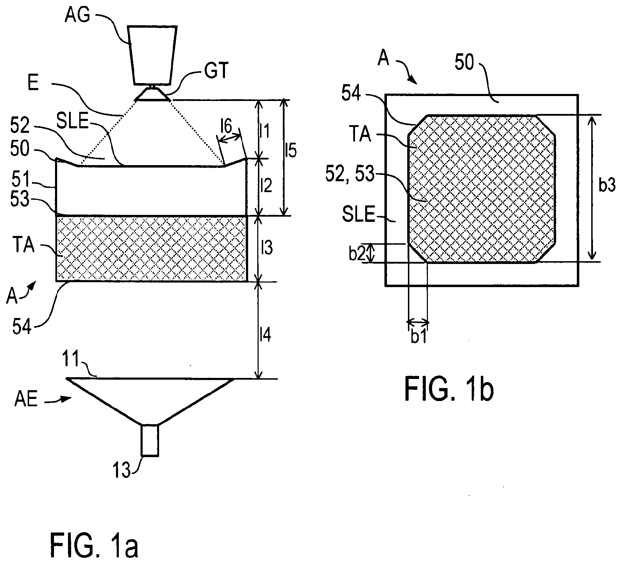

Figur 1a zeigt eine Vorrichtung zum Aufnehmen und/oder Entsorgen von Entsorgungsmittel E aus Reinigungs- und/oder Spülprozessen eines Applikationsgeräts AG in einem montierten Zustand bzw. während eines Reinigungs- und/oder Spülprozesses. Die Vorrichtung umfasst eine Abscheidungseinrichtung A, die vorgesehen ist, um das von dem Applikationsgerät AG abgegebene Entsorgungsmittel E entgegenzunehmen und einer Abscheidung zu unterziehen. Das Applikationsgerät AG ist ein Rotationszerstäuber, der als Absprühelement einen Glockenteller GT aufweist. Die Abscheidungseinrichtung A umfasst einen Tropfenabscheider TA, der vorgesehen ist, das von dem Applikationsgerät AG abgegebene Entsorgungsmittel E entgegenzunehmen und einer Tropfenabscheidung zu unterziehen. Der Tropfenabscheider TA ist vorzugsweise ein Prallabscheider. Die Abscheidungseinrichtung A umfasst ferner eine Strömungsleiteinrichtung SLE, die vorgesehen ist, um das aus dem Applikationsgerät AG abgegebene Entsorgungsmittel E zu dem Tropfenabscheider TA zu lenken und/oder um eine Dynamikkomponente in Richtung des Tropfenabscheiders TA zu erzeugen.

Ferner umfasst die in Figur 1a gezeigte Vorrichtung
eine Annahmeeinrichtung AE, die als Sammeltrichter (z.B. mit kreisrundem oder quadratischem Querschnitt) vorgesehen ist, um das einer Abscheidung unterzogene Entsorgungsmittel E von der Abscheidungseinrichtung A, insbesondere dem Tropfenabscheider TA anzunehmen und abzuführen. Die Annahmeeinrichtung AE weist eine Einlassöffnung 11 für das Entsorgungsmittel E auf und eine Auslassöffnung 13 für das Entsorgungsmittel E auf, um das Entsorgungsmittel E vorzugsweise über eine Abführleitung z.B. zu einem Sammeltank (nicht gezeigt in Figur 1a) zu führen. Vorzugsweise ist die Abscheidungseinrichtung A auf einem in Figur 1a nicht gezeigten Gitterrost angeordnet, während die Annahmeeinrichtung AE unter dem Gitterost angeordnet ist.

Die in Figur 1a gezeigte Strömungsleiteinrichtung SLE hat einen sich zum Tropfenabscheider TA hin verjüngenden ersten Abschnitt 50 und einen in Verlängerung der Außenwandung des Tropfenabscheiders TA im Wesentlichen parallel verlaufenden zweiten Abschnitt 51. Die Anströmfläche 52 der Strömungsleiteinrichtung SLE und/oder die Anströmfläche 53 des Tropfenabscheiders TA ist bemessen, um den Entsorgungsmittelsprühstrahl im Wesentlichen vollständig aufzunehmen, und ist insbesondere im Wesentlichen quadratisch bzw. mehreckig ausgebildet. Insbesondere ist die Anströmfläche 53 des Tropfenabscheiders TA so ausgestaltet ist, dass ein Rückprall des aus dem Applikationsgerät AG abgegebenen Entsorgungsmittels E reduziert oder vermieden wird.

Der Tropfenabscheider TA hat vorzugsweise eine Höhe 13 von ungefähr 170mm. Die Strömungsleiteinrichtung SLE hat vorzugsweise eine Höhe 12 von ungefähr 150mm. Der erste Abschnitt hat vorzugsweise eine Länge 16 von zwischen ungefähr 50mm bis 60mm.

Im montierten Zustand der Vorrichtung bzw. während eines Spül- und/oder Reinigungsprozesses ist es insbesondere möglich, dass
a) der axiale Abstand 15 zwischen der Anströmfläche bzw. dem Einlass 53 des Tropfenabscheiders TA und dem Applikationsgerät AG (insbesondere dem Absprühelement, das vorzugsweise ein Glockenteller GT ist) zwischen ungefähr 230mm und 400mm beträgt; und/oder
b) der axiale Abstand 11 zwischen der Anströmfläche bzw. dem Einlass 52 der Strömungsleiteinrichtung SLE und dem Applikationsgerät AG (insbesondere dem Absprühelement, das vorzugsweise ein Glockenteller GT ist) zwischen ungefähr 80mm und 250mm beträgt; und/oder
c) der axiale Abstand 14 zwischen dem Auslass 54 des Tropfenabscheiders TA und der Einlassöffnung 11 der Annahmeeinrichtung AE ungefähr 250mm beträgt.

Figur 1b zeigt eine Draufsicht auf die Abscheidungseinrichtung A gemäß Figur 1a und insbesondere auf die Strömungsleiteinrichtung SLE und den Tropfenabscheider TA.

Die Strömungsleiteinrichtung SLE bzw. der erste Abschnitt 50 kann innenseitig abgeschrägte Ecken 54 aufweisen, die sich jeweils über eine erste Breite b1 und eine zweite Breite b2 erstrecken können. Die erste Breite b1 entspricht vorzugsweise der zweiten Breite b2 und kann größer sein als ungefähr 30mm, 40mm, 50mm, 60mm, 70mm, 80mm oder 90mm und/oder kleiner sein als ungefähr 35mm, 45mm, 55mm, 65mm, 75mm, 85mm oder 95mm, insbesondere ungefähr 55mm bei Draufsicht auf die Strömungsleiteinrichtung SLE.

Die Anströmfläche 53 des Tropfenabscheiders TA und/oder die Anströmfläche 52 der Strömungsleiteinrichtung SLE ist etwas größer als die entstehende Querschnittsfläche des Entsorgungsmittelsprühstahls, der vorzugsweise in Form eines Sprühkegels vorliegt, bei Auftreffen auf die jeweilige Anströmfläche 52 und/oder 53. Bei einem axialen Abstand 15 von ungefähr 200mm bis 400mm entspricht das ungefähr einer kreisförmigen Anströmfläche mit Durchmesser von ungefähr 300mm bis 700mm bzw. einer z.B. quadratischen Anströmfläche mit Breite b3 von ungefähr 300mm bis 700mm.

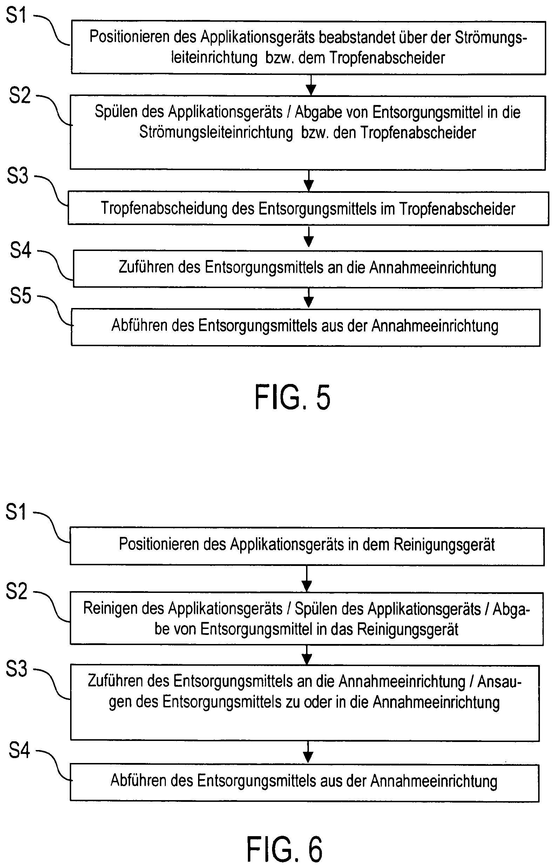

Figur 5 zeigt ein Flussdiagramm eines Verfahrens, das bei der Vorrichtung gemäß Figur 1a durchführbar ist. In einem Schritt S1 wird das Applikationsgerät AG beabstandet über der Strömungsleiteinrichtung SLE bzw. beabstandet über dem Tropfenabscheider TA positioniert. In einem zweiten Schritt S2 wird das Applikationsgerät AG gespült bzw. Entsorgungsmittel E an die Strömungsleiteinrichtung SLE bzw. den Tropfenabscheider TA abgegeben. In einem dritten Schritt S3 wird das dem Tropfenabscheider TA zugeführte Entsorgungsmittel E einer Tropfenabscheidung unterzogen. In einem vierten Schritt S4 wird das Entsorgungsmittel E aus dem Tropfenabscheider TA der Annahmeeinrichtung AE zugeführt, von der es dann in einem Schritt S5 z.B. über ein Abführrohr einem Sammeltank zugeführt wird.

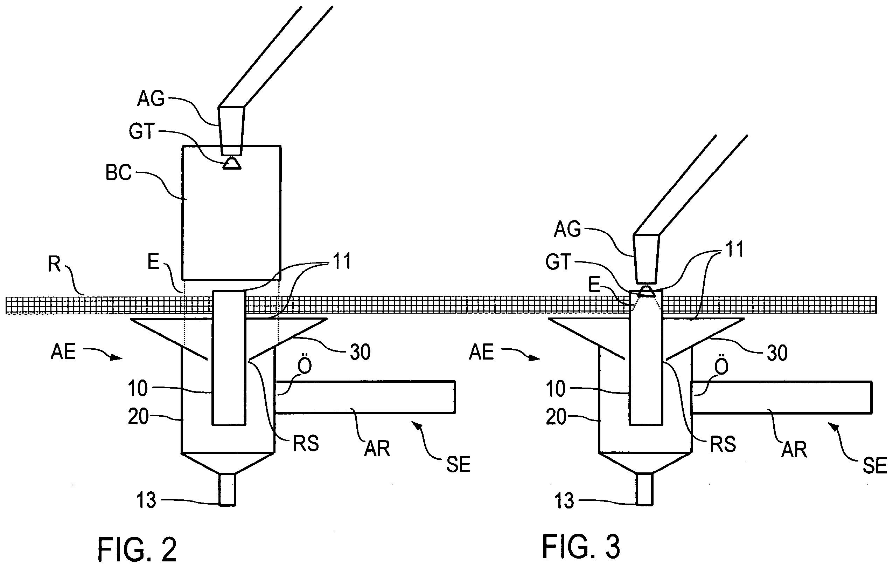

Figur 2 zeigt eine Vorrichtung zum Aufnehmen und/oder Entsorgen von Entsorgungsmittel aus Reinigungs- und/oder Spülprozessen eines Applikationsgeräts gemäß einem zweiten Ausführungsbeispiel der Erfindung. Die Teile des zweiten Ausführungsbeispiels, die identisch oder ähnlich zu den Teilen des ersten Ausführungsbeispiels sind, sind mit den gleichen Bezugszeichen versehen, wobei zu deren Erläuterung auf die Beschreibung des ersten Ausführungsbeispiels verwiesen wird.

Die Vorrichtung umfasst eine Annahmeeinrichtung AE, die vorgesehen ist, um Entsorgungsmittel E von einem Applikationsgerät AG und/oder von einem der Annahmeeinrichtung AE vorgeschalteten Reinigungsgerät BC entgegenzunehmen. Das Reinigungsgerät BC ist vorgesehen, das Applikationsgerät AG mittels Reinigungsmittel, das einem Entsorgungsmittel E entspricht, zu reinigen und/oder das von dem Applikationsgerät AG abgegebene Entsorgungsmittel E entgegenzunehmen und das Entsorgungsmittel E an oder in die Annahmeeinrichtung AE abzugeben. Das Entsorgungsmittel E kann somit Spülmittel sein, das von dem Applikationsgerät AG abgegeben wird, und/oder Reinigungsmittel, das von dem Reinigungsgerät BC abgegeben wird.

Ferner umfasst die Vorrichtung eine Saugeinrichtung SE, die vorgesehen ist, um zumindest einen Teil des an oder in die Annahmeeinrichtung AE geführten und/oder von dem Reinigungsgerät BC abgegebenen Entsorgungsmittel E anzusaugen und/oder abzusaugen.

Die Annahmeeinrichtung AE umfasst einen zylinderförmigen ersten Körper 10, der vorzugsweise ein Innenrohr ist, einen zylinderförmigen und/oder trichterförmigen zweiten Körper 20 und einen trichterförmigen dritten Körper 30. Die Annahmeeinrichtung AE kann zumindest eine Einlassöffnung 11, um das Entsorgungsmittel E einzubringen, und zumindest eine Auslassöffnung 13, um das Entsorgungsmittel E vorzugsweise über eine Abführleitung z.B. zu einem Sammeltank (nicht gezeigt in Figur 2) zu führen. Die Einlassöffnung 11 ist vorgesehen, um das Entsorgungsmittel E in den ersten Körper 10, jedoch insbesondere an oder in den dritten Körper 30 bzw. in einen Zwischenraum zwischen dem ersten Körper 10 und dem dritten Körper 30 einzubringen.

Der dritte Körper 30 hat einen größeren Durchmesser als der erste Körper 10. Der zweite Körper 20 hat zumindest abschnittsweise einen größeren Durchmesser als der erste Körper 10 und/oder der dritte Körper 30. Der dritte Körper 30 umgibt zumindest teilweise den ersten Körper 10, um einen Zwischenraum zwischen dem dritten Körper 30 und dem ersten Körper 10 zu bilden. Der zweite Körper 20 umgibt zumindest teilweise den ersten Körper 10 (und den dritten Körper 30), um einen Zwischenraum zwischen dem zweiten Körper 20 und dem ersten Körper 10 (und dem dritten Körper 30) zu bilden. Der erste Körper 10 und der zweite Körper 20 sind voneinander beabstandet, um einen Zwischenraum zwischen dem ersten Körper 10 und dem zweiten Körper 20 zu bilden.

Insbesondere weist die Annahmeeinrichtung AE einen umlaufenden Ringspalt RS auf, durch den Entsorgungsmittel E zu der Auslassöffnung 13 der Annahmeeinrichtung AE geführt werden kann und/oder durch den Entsorgungsmittel E nach unten und/oder zur Seite an- bzw. abgesaugt werden kann. Der Ringspalt RS ist ausgebildet zwischen dem ersten Körper 10 und dem dritten Körper 30. Insbesondere ist der Ringspalt RS zwischen dem zylinderförmigen ersten Körper 10 und dem vorzugsweise im Wesentlichen kleinsten Durchmesser des trichterförmigen dritten Körpers 30 (d.h. im montierten Zustand der Vorrichtung bzw. während eines Reinigungs- und/oder Spülprozesses der unterste Abschnitt des dritten Körpers 30) ausgebildet. Der Ringspalt RS weist eine Breite von zwischen ungefähr 10mm und ungefähr 20mm auf.

Die Annahmeeinrichtung AE ist im Wesentlichen unter einem Gitterrost R und/oder unterhalb eines Gitterrost-Niveaus positioniert, vorzugsweise in Reichweite eines Lackierroboters. Ein Teil der Annahmeeinrichtung AE, nämlich ein oberer Abschnitt des ersten Körpers 10 ist in einer Öffnung im Gitterrost R angeordnet bzw. ragt durch und über den Gitterrost R hinaus. Insbesondere ist die Öffnung im Gitterrost R so vorgesehen, dass zumindest die Einlassöffnung 11 der Annahmeeinrichtung AE freigelegt wird, um das Applikationsgerät AG (insbesondere dessen Absprühelement, z.B. der Glockenteller GT) zumindest teilweise in der Öffnung des Gitterrosts R, in der Einlassöffnung 11 und/oder der Annahmeeinrichtung AE positionieren zu können.

Die Saugeinrichtung SE umfasst ein Absaugrohr AR und einen Absaugtrakt, der eine Partikelabscheidungseinrichtung aufweist. Die Annahmeeinrichtung AE umfasst eine Anschlussöffnung Ö, insbesondere angeordnet an einer Seitenwand der Annahmeeinrichtung AE und/oder des zweiten Körpers 20, mit der das Absaugrohr AR verbunden ist. Das Absaugrohr AR mündet in den Zwischenraum zwischen dem ersten Körper 10 und dem zweiten Körper 20. Die Anschlussöffnung Ö steht vollständig der Seitenwand des ersten Körpers 10 gegenüber und ist zwischen der Einlassöffnung 11 und der Auslassöffnung 13 der Annahmeeinrichtung AE angeordnet.

Figur 6 zeigt ein Flussdiagramm eines erfindungsgemäßen Verfahrens, das bei der Vorrichtung gemäß Figur 2 durchgeführt werden kann. In einem Schritt S1 kann das Applikationsgerät AG zumindest abschnittsweise in dem der Annahmeeinrichtung AE vorgeschalteten Reinigungsgerät BC positioniert werden. In einem Schritt S2 kann das Applikationsgerät AG durch das Reinigungsgerät BC gereinigt werden und/oder das Applikationsgerät AG kann das Entsorgungsmittel E aus dessen Spülprozess in das Reinigungsgerät BC abgeben. In einem Schritt S3 gelangt das (zerstäubte und/oder unzerstäubte) Entsorgungsmittel E von dem Reinigungsgerät BC an oder in die Annahmeeinrichtung AE, insbesondere an oder in den dritten Körper 30. Das von dem Reinigungsgerät BC abgegebene (zerstäubte und/oder unzerstäubte) Entsorgungsmittel E wird vorzugsweise gleichzeitig zu Schritt S3 mittels der Saugeinrichtung SE nach unten und/oder zumindest teilweise zur Seite an- bzw. abgesaugt. Insbesondere wird der flüssige Teil des Entsorgungsmittels E dem trichterförmigen dritten Körper 30 zugeführt und gelangt über den Ringspalt RS zu der Auslassöffnung 13 der Annahmeeinrichtung AE. In einem vierten Schritt S4 wird das Entsorgungsmittel E aus der Annahmeeinrichtung AE abgeführt und z.B. über ein Abführrohr zu einem Sammeltank geleitet. Das Entsorgungsmittel E umfasst organische Bestandteile, insbesondere organische Lösemittel.

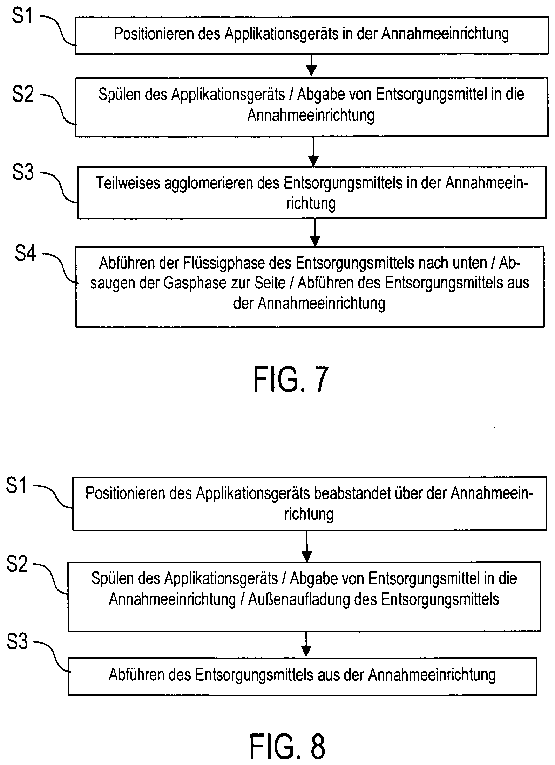

Figur 3 zeigt eine Vorrichtung, die der Vorrichtung gemäß Figur 2 entspricht, so dass die gleichen Bezugszeichen für gleiche Teile verwendet werden und zu deren Erläuterung auf die Beschreibung des vorigen Ausführungsbeispiels verwiesen wird. Figur 3 zeigt insbesondere, dass ein oberer Abschnitt des ersten Körpers 10 durch eine Öffnung im Gitterrost R hindurchgeführt ist bzw. so freigelegt ist, dass der Glockenteller GT des Applikationsgeräts AG in der Einlassöffnung 11 bzw. dem ersten Körper 10 positioniert werden kann, um darin das Entsorgungsmittel E abzugeben. Figur 7 zeigt ein Flussdiagramm eines erfindungsgemäßen Verfahrens, das bei der Vorrichtung gemäß Figur 3 durchgeführt werden kann. In einem ersten Schritt S1 wird das Applikationsgerät AG zumindest abschnittsweise (z.B. mit dem Absprühelement, insbesondere dem Glockenteller GT) in der Annahmeeinrichtung AE, vorzugsweise in dem ersten Körper 10 und/oder der Einlassöffnung 11 positioniert. In einem zweiten Schritt S2 wird das Applikationsgerät AG gespült bzw. gibt das Applikationsgerät AG das Entsorgungsmittel E in die Annahmeeinrichtung AE, insbesondere den ersten Körper 10 ab. In einem dritten Schritt S3 wird das vorzugsweise zerstäubte Entsorgungsmittel E zumindest teilweise in der Annahmeeinrichtung AE agglomeriert. In einem vierten Schritt S4 wird der flüssige Teil des Entsorgungsmittels E (mittels des ersten Körpers 10) nach unten abgeführt und der im Wesentlichen gasförmige Teil des Entsorgungsmittels E wird durch die Saugeinrichtung SE zur Seite an- bzw. abgesaugt. Das Entsorgungsmittel E umfasst organische Bestandteile, insbesondere organische Lösemittel.

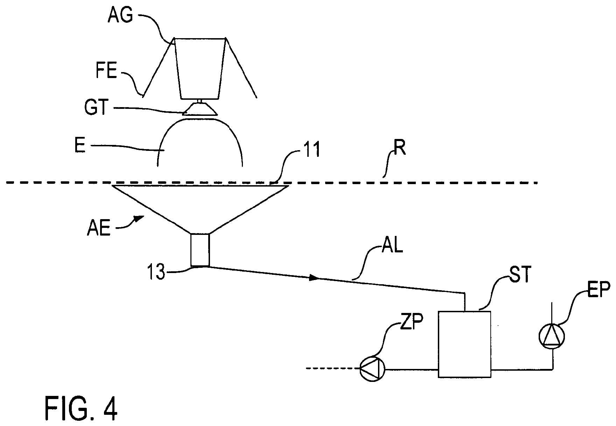

Figur 4 zeigt eine Darstellung eines Applikationsgeräts AG während eines Reinigungs-/Spülprozesses und einen Teil eines Entsorgungssystems gemäß einem Ausführungsbeispiel der Erfindung. Die Teile des Ausführungsbeispiels gemäß Figur 4, die identisch oder ähnlich zu den Teilen der vorigen Ausführungsbeispiele sind, werden mit den gleichen Bezugszeichen versehen, wobei zu deren Erläuterung auf die Beschreibung der vorigen Ausführungsbeispiele verwiesen wird.

Das Applikationsgerät AG ist ein Zerstäuber, beispielsweise ein Rotationszerstäuber, der als Absprühelement einen Glockenteller GT aufweist und der ein System zur elektrostatischen Aufladung von Beschichtungs- und/oder Entsorgungsmittel E umfasst, vorzugsweise mit Hochspannung, insbesondere zur Außenaufladung mittels mehreren Außenelektroden (z.B. mehrere Fingerelektroden FE oder ein Elektrodenring, der mehrere Elektroden umfasst, wobei die Elektroden vorzugsweise gleichmäßig um das Applikationsgerät AG herum angeordnet sind). Die Elektroden sind vorzugsweise Hochspannungselektroden. Die Außenaufladung ist aus dem Stand der Technik bei Rotationszerstäubern zu Beschichtungszwecken bekannt. Die Annahmeeinrichtung AE ist unter einem Gitterrost R angeordnet.

Bei dem in Figur 4 gezeigten Ausführungsbeispiel wird der Reinigungs- und/oder Spülvorgang bei einer elektrostatisch unterstützten Ausgabe unter Hochspannung ausgeführt. Dabei wird analog des Beschichtungsprozesses mit Beschichtungsmittel, vorzugsweise Lack, in diesem Fall das Entsorgungsmittel E, d.h. Reinigungs- und/oder Spülmittel (mit oder ohne Lackresten) an den Innenflächen der Annahmeeinrichtung AE abgeschieden und gezielt abgeführt.

In Figur 4 ist ferner schematisch ein Teil eines Entsorgungssystems gezeigt, das so auch bei den vorstehend beschriebenen Vorrichtungen eingesetzt werden kann. Die Annahmeeinrichtung AE, insbesondere die Auslassöffnung 13 ist mit einer Abführleitung AL verbunden, die vorzugsweise ein Gefälle aufweist und das Entsorgungsmittel E in einen Sammeltank ST leitet. Die Abführleitung AL verläuft vorzugsweise im Wesentlichen parallel zu einer Lackierstraße und kann an eine oder mehrere Annahmeeinrichtungen gekoppelt sein. Das Entsorgungssystem kann ferner eine Zirkulationspumpe ZP aufweisen, um das Entsorgungsmittel E aus dem Sammeltank ST vorzugsweise kontinuierlich z.B. zum Anfangspunkt der Abführleitung AL zu befördern, wodurch ein Ablagern des Entsorgungsmittels E in der Abführleitung AL bzw. dem Sammeltank ST reduziert oder vermieden werden kann. Sobald der Sammeltank ST voll ist, kann der Sammeltank ST entweder mit Hilfe einer optionalen Entsorgungspumpe EP in einen weiteren Transportbehälter befördert werden oder in einen Transportcontainer entleert werden.

Figur 8 zeigt ein Flussdiagramm eines Verfahrens, das bei der Vorrichtung gemäß Figur 4 durchführbar ist. In einem ersten Schritt S1 wird das Applikationsgerät AG beabstandet über der Annahmeeinrichtung AE positioniert. In einem zweiten Schritt S2 wird das Applikationsgerät AG gespült bzw. gibt das Applikationsgerät AG das Entsorgungsmittel E in die Annahmeeinrichtung AE, insbesondere in ein trichterförmiges Sammelelement ab, wobei das abgegebene Entsorgungsmittel E mittels der Fingerelektroden FE mit Hochspannung aufgeladen wird. In einem dritten Schritt S3 wird das Entsorgungsmittel E aus der Annahmeeinrichtung AE abgeführt und z.B. über ein Abführrohr zu einem Sammeltank geleitet.

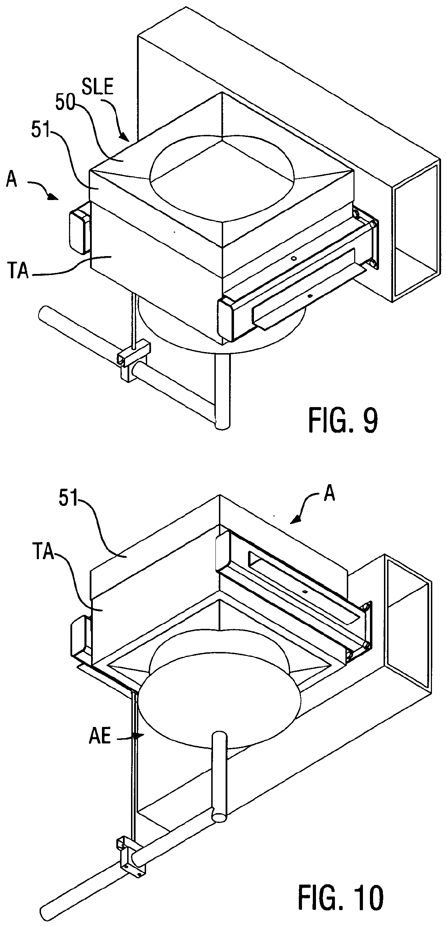

Figur 9 zeigt eine perspektivische Draufsicht und Figur 10 eine perspektivische Unteransicht der Vorrichtung gemäß den Figuren 1a und 1b. Die Vorrichtung wird vorzugsweise in einer Lackierkabine unter einem in den Figuren 9 und 10 nicht gezeigten Gitterrost verwendet. Der Tropfenabscheider TA ist in einer eine Außenwandung umfassenden Einhausung untergebracht. Insbesondere kann in der Figur 9 der sich zum Tropfenabscheider TA hin verjüngende erste Abschnitt 50 und der in Verlängerung der Außenwandung des Tropfenabscheiders TA ausgebildete zweite Abschnitt 51 der Strömungsleiteinrichtung SLE gesehen werden. Durch die räumliche Begrenzung des Anströmbereichs des Tropfenabscheiders TA mittels des ersten Abschnitts 50 (nach oben) und des zweiten Abschnitts 51 (seitlich) kann eine annähernd vollständige Durchströmung und somit vorteilhaft eine hohe Wirksamkeit des Tropfenabscheiders TA erzielt werden.

## Patentansprüche

1. Vorrichtung zum Aufnehmen und/oder Abgeben von Entsorgungsmittel (E) aus Reinigungs- und/oder Spülprozessen eines Applikationsgeräts (AG), mit einer Abscheidungseinrichtung (A), wobei die Abscheidungseinrichtung (A) einen Tropfenabscheider (TA) umfasst, der vorgesehen ist, um das von dem Applikationsgerät (AG) abgegebene Entsorgungsmittel (E) entgegenzunehmen und einer Tropfenabscheidung zu unterziehen, wobei die Abscheidungseinrichtung (A) eine Strömungsleiteinrichtung (SLE) umfasst, um das aus dem Applikationsgerät (AG) abgegebene Entsorgungsmittel (E) zu dem Tropfenabscheider (TA) zu lenken und/oder um eine Dynamikkomponente in Richtung des Tropfenabscheiders (TA) zu erzeugen, und die Strömungsleiteinrichtung (SLE) einen sich zum Tropfenabscheider (TA) hin verjüngenden ersten Abschnitt (50) aufweist,
**dadurch gekennzeichnet, dass** die Abscheidungseinrichtung (A) vorgesehen ist, um das von dem Applikationsgerät (AG) abgegebene Entsorgungsmittel (E) einer Prallabscheidung zu unterziehen und/oder der Tropfenabscheider (TA) ein Prallabscheider ist,
und die Vorrichtung durch zumindest eines der folgenden Merkmale a) und b) gekennzeichnet ist,
a) dass die Anströmfläche (52) der Strömungsleiteinrichtung (SLE) bemessen ist, um den Entsorgungsmittelsprühstrahl im Wesentlichen vollständig aufzunehmen, und
b) dass die Anströmfläche (53) des Tropfenabscheiders (TA) so ausgestaltet ist, dass ein Rückprall des aus dem Applikationsgerät (AG) abgegebenen Entsorgungsmittels (E) reduziert oder vermieden wird.

2. Vorrichtung gemäß Anspruch 1, **dadurch gekennzeichnet, dass** die Strömungsleiteinrichtung (SLE) einen in Verlängerung der Außenwandung des Tropfenabscheiders (TA) im Wesentlichen parallel verlaufenden zweiten Abschnitt (51) aufweist.

3. Vorrichtung gemäß einem der Ansprüche 1 bis 2, **dadurch gekennzeichnet, dass** die Anströmfläche (52, 53) der Strömungsleiteinrichtung (SLE) und/oder des Tropfenabscheiders (TA)
a) bemessen ist, um den Entsorgungsmittelsprühstrahl im Wesentlichen vollständig aufzunehmen; und
b) eine Breite, Seitenlänge oder Durchmesser (b3) aufweist von
b1) größer ungefähr 100mm,; und
b2) kleiner ungefähr 850mm.

4. Vorrichtung gemäß einem der Ansprüche 1 bis 3, **dadurch gekennzeichnet, dass** die Vorrichtung eine Annahmeeinrichtung (AE) umfasst, die vorgesehen ist, um das einer Abscheidung unterzogene Entsorgungsmittel (E) von der Abscheidungseinrichtung (A) anzunehmen und/oder abzuführen.

5. Vorrichtung gemäß Anspruch 4, **dadurch gekennzeichnet, dass** die Abscheidungseinrichtung (A) über einem Beschichtungskabinenboden einer Beschichtungsanlage angeordnet ist und die Annahmeeinrichtung (AE) unter dem Beschichtungskabinenboden angeordnet ist.

6. Vorrichtung gemäß einem der Ansprüche 4 bis 5, **dadurch gekennzeichnet, dass** die Abscheidungseinrichtung (A) vorgesehen ist,
a) beabstandet über der Annahmeeinrichtung (AE) positioniert zu sein; und
b) beabstandet unter dem Applikationsgerät (AG) positioniert zu sein, wenn der Reinigungs- und/oder Spülprozess durchgeführt wird.

7. Vorrichtung gemäß einem der Ansprüche 1 bis 6, **dadurch gekennzeichnet, dass** das Applikationsgerät (AG) ein Zerstäuber ist und der von dem Applikationsgerät (AG) abgegebene Entsorgungsmittelsprühstrahl ein zerstäubter Entsorgungsmittelsprühstrahl ist.

8. Verfahren zum Aufnehmen und/oder Abgeben von Entsorgungsmittel aus Reinigungs- und/oder Spülprozessen eines Applikationsgeräts (AG), vorzugsweise durchgeführt mit einer Vorrichtung nach einem der vorhergehenden Ansprüche, wobei das Applikationsgerät (AG) das Entsorgungsmittel (E) in eine Abscheidungseinrichtung (A) abgibt und die Abscheidungseinrichtung (A) einen Tropfenabscheider (TA) umfasst, wo es einer Tropfenabscheidung unterzogen wird, wobei die Abscheidungseinrichtung (A) eine Strömungsleiteinrichtung (SLE) umfasst, um das aus dem Applikationsgerät (AG) abgegebene Entsorgungsmittel (E) zu dem Tropfenabscheider (TA) zu lenken und/oder um eine Dynamikkomponente in Richtung des Tropfenabscheiders (TA) zu erzeugen, und die Strömungsleiteinrichtung (SLE) einen sich zum Tropfenabscheider (TA) hin verjüngenden ersten Abschnitt (50) aufweist, **dadurch gekennzeichnet, dass** die Abscheidungseinrichtung (A) das von dem Applikationsgerät (AG) abgegebene Entsorgungsmittel (E) einer Prallabscheidung unterzieht und/oder der Tropfenabscheider (TA) ein Prallabscheider ist,
und das Verfahren durch zumindest eines der folgenden Merkmale a) und b) gekennzeichnet ist,
a) dass die Anströmfläche (52) der Strömungsleiteinrichtung (SLE) bemessen ist, um den Entsorgungsmittelsprühstrahl im Wesentlichen vollständig aufzunehmen, und
b) dass die Anströmfläche (53) des Tropfenabscheiders (TA) so ausgestaltet ist, dass ein Rückprall des aus dem Applikationsgerät (AG) abgegebenen Entsorgungsmittels (E) reduziert oder vermieden wird.

9. Entsorgungssystem für Entsorgungsmittel, insbesondere für Entsorgungsmittel aus Reinigungs- und/oder Spülprozessen eines Applikationsgeräts (AG), umfassend eine Vorrichtung gemäß einem der Ansprüche 1 bis 7 und eine Abführleitung (AL), die vorgesehen ist, um das Entsorgungsmittel (E) von der Annahmeeinrichtung (AE) zu einem Sammeltank (ST) abzuführen.

10. Entsorgungssystem gemäß Anspruch 9, **dadurch gekennzeichnet, dass** die Annahmeeinrichtung (AE) im Wesentlichen unter einem Gitterrost (R) oder unterhalb eines Gitterrost-Niveaus des Entsorgungssystems in Reichweite eines Lackierroboters positioniert ist.

## Claims

1. A device for receiving and/or discharging of a disposal medium (E) from cleaning and/or rinsing processes of an application apparatus (AG), with a separation equipment (A), the separation equipment (A) comprising a droplet separator (TA) which is provided for in order to receive the disposal medium (E) discharged by the application apparatus (AG) and to subject it to a droplet separation,
wherein the separation equipment (A) comprises a flow conducting equipment (SLE) in order to deflect the disposal medium (E) discharged from the application apparatus (AG) to the droplet separator (TA) and/or in order to generate a dynamic component in the direction of the droplet separator (TA), and the flow conducting equipment (SLE) has a first section (50) tapering towards the droplet separator (TA), **characterized in that** the separation equipment (A) is provided for in order to subject the disposal medium (E) discharged by the application apparatus (AG) to an impact separation, and/or the droplet separator (TA) is an impact separator,
and the device is **characterized by** at least one of the following features a) and b)
a) that the on-stream surface (52) of the flow conducting equipment (SLE) is dimensioned in such a way that the disposal medium spray jet can be received essentially in full, and
b) that the on-stream surface (53) of the droplet separator (TA) is designed in such a way that a rebound of the disposal medium (E) discharged by the application apparatus (AG) is reduced or avoided.

2. The device according to Claim 1, **characterized in that** the flow conducting equipment (SLE) has an essentially parallel running second section (51) in an extension of the outer wall of the droplet separator (TA).

3. The device according to any one of Claims 1 to 2, **characterized in that** the on-stream surface (52, 53) of the flow conducting equipment (SLE) and/or of the droplet separator (TA)
a) is dimensioned in such a way that the disposal medium spray jet can be received essentially in full; and
b) has a width, side length or diameter (b3) of
b1) greater than about 100 mm; and
b2) less than about 850 mm.

4. The device according to any one of Claims 1 to 3, **characterized in that** the device comprises a receiving equipment (AE) which is provided for in order to receive and/or discharge the disposal medium (E) from the separation equipment (A) which has undergone a separation.

5. The device according to Claim 4, **characterized in that** the separation equipment (A) is arranged above a coating cabin floor of a coating installation and the receiving equipment (AE) is arranged below the coating cabin floor.

6. The device according to any one of Claims 4 to 5, **characterized in that** the separation equipment (A) is provided for
a) to be positioned spaced apart above the receiving equipment (AE); and
b) to be positioned spaced apart below the application apparatus (AG) when the cleaning and/or rinsing process is performed.

7. The device according to any one of Claims 1 to 6, **characterized in that** the application apparatus (AG) is an atomizer and the disposal medium spray jet discharged by the application apparatus (AG) is an atomized disposal medium spray jet.

8. A method for receiving and/or discharging a disposal medium from cleaning and/or rinsing processes of an application apparatus (AG), preferably performed with a device according to any one of the preceding claims, wherein the application apparatus (AG) discharges the disposal medium (E) into a separation equipment (A) and the separation equipment (A) comprises a droplet separator (TA), where it is subjected to a droplet separation, wherein the separation equipment (A) comprises a flow conducting equipment (SLE) in order to deflect the disposal medium (E) discharged from the application apparatus (AG) to the droplet separator (TA) and/or to generate a dynamic component in the direction of the droplet separator (TA), and the flow conducting equipment (SLE) has a first section (50) tapering towards the droplet separator (TA), **characterized in that** the separation equipment (A) subjects the disposal medium (E) discharged by the application apparatus (AG) to an impact separation, and/or the droplet separator (TA) is an impact separator,
and the method is **characterized by** at least one of the following features a) and b)
a) that the on-stream surface (52) of the flow conducting equipment (SLE) is dimensioned in such a way that the disposal medium spray jet can be received essentially in full, and
b) that the on-stream surface (53) of the droplet separator (TA) is designed in such a way that a rebound of the disposal medium (E) discharged by the application apparatus (AG) is reduced or avoided.

9. A disposal system for a disposal medium particularly from cleaning and/or rinsing processes of an application apparatus (AG), comprising a device according to any one of Claims 1 to 7 and a discharge line (AL) which is provided for in order to remove the disposal medium (E) from the receiving equipment (AE) to a collection tank (ST).

10. The disposal system according to Claim 9, **characterized in that** the receiving equipment (AE) is essentially positioned below a grating (R) or below a grating level of the disposal system within range of a painting robot.

## Revendications

1. Dispositif de logement et/ou d'évacuation de produits d'élimination (E) hors de processus de nettoyage et/ou de rinçage d'un appareil d'application (AG), avec un dispositif de séparation (A), le dispositif de séparation (A) comprenant un séparateur par gouttelettes (TA) qui est conçu pour prendre en charge le produit d'élimination (E) évacué par l'appareil d'application (AG) et le soumettre à une séparation par gouttelettes, le dispositif de séparation (A) comprenant un dispositif de guidage d'écoulement (SLE) pour guider le produit d'élimination (E) évacué hors de l'appareil d'application (AG) vers le séparateur par gouttelettes (TA) et/ou pour générer une composante dynamique en direction du séparateur par gouttelettes (TA), et le dispositif de guidage d'écoulement (SLE) comprenant une première portion (50) se rétrécissant en direction du séparateur par gouttelettes (TA),
**caractérisé en ce que** le dispositif de séparation (A) est conçu pour soumettre le produit d'élimination (E) évacué hors de l'appareil d'application (AG) à une séparation à impact et/ou le séparateur à gouttelettes (TA) est un séparateur à impact
et le dispositif est **caractérisé par** au moins une des caractéristiques suivantes a) et b) :
a) la surface d'arrivée d'écoulement (52) du dispositif de guidage d'écoulement (SLE) est dimensionnée afin de loger globalement entièrement le jet de pulvérisation de produits d'élimination et
b) la surface d'arrivée d'écoulement (53) séparateur par gouttelettes (TA) est conçu de sorte qu'un rebond du produit d'élimination (E) évacué hors de l'appareil d'application (AG) est réduit ou évité.

2. Dispositif selon la revendication 1, **caractérisé en ce que** le dispositif de guidage d'écoulement (SLE) comprend une deuxième portion (51) s'étendant globalement parallèlement dans le prolongement de la paroi externe du séparateur à gouttelettes (TA).

3. Dispositif selon l'une des revendications 1 à 2, **caractérisé en ce que** la surface d'arrivée d'écoulement (52, 53) du dispositif de guidage d'écoulement (SLE) et/ou du séparateur à gouttelettes (TA)
a) est dimensionnée de façon à loger entièrement le jet de pulvérisation de produit d'élimination ; et
b) présente une largeur, une longueur latérale ou un diamètre (b3)
b1) supérieur à environ 100 mm ; et
b2) inférieur à environ 850 mm.

4. Dispositif selon l'une des revendications 1 à 3, **caractérisé en ce que** le dispositif comprend un dispositif de logement (AE) qui est conçu afin de loger et/ou d'évacuer le produit d'élimination (E) soumis à une séparation provenant du dispositif de séparation (A).

5. Dispositif selon la revendication 4, **caractérisé en ce que** le dispositif de séparation (A) est disposé au-dessus d'un fond de cabine de revêtement d'une installation de revêtement et le dispositif de réception (AE) est disposé sous le fond de la cabine de revêtement.

6. Dispositif selon l'une des revendications 4 à 5, **caractérisé en ce que** le dispositif de séparation (A) est conçu pour
a) être positionné à une certaine distance au-dessus du dispositif de réception (AE) ; et
b) être positionné à une certaine distance sous l'appareil d'application (AG) lorsque le processus de nettoyage et/ou de rinçage est effectué.

7. Dispositif selon l'une des revendications 1 à 6, **caractérisé en ce que** l'appareil d'application (AG) est un pulvérisateur et le jet de pulvérisation de produit d'élimination évacué par l'appareil d'application (AG) est un jet de pulvérisation de produit d'élimination pulvérisé.

8. Procédé pour le logement et/ou l'évacuation d'un produit d'élimination hors de processus de nettoyage et/ou de rinçage d'un appareil d'application (AG), de préférence effectué avec un dispositif selon l'une des revendications précédentes, l'appareil d'application (AG) évacuant le produit d'élimination (E) dans un dispositif de séparation (A) et le dispositif de séparation (A) comprenant un séparateur à gouttelettes (TA), où il est soumis à une séparation par gouttelettes, le dispositif de séparation (A) comprenant un dispositif de guidage d'écoulement (SLE) pour guider le produit d'élimination (E) évacué hors de l'appareil d'application (AG) vers le séparateur à gouttelettes (TA) et/ou pour générer une composante dynamique en direction du séparateur à gouttelettes (TA) et le dispositif de guidage d'écoulement (SLE) comprend une première portion (50) se rétrécissant en direction du séparateur à gouttelettes (TA), **caractérisé en ce que** le dispositif de séparation (A) soumet le produit d'élimination (E) évacué par l'appareil d'application (AG) à une séparation par impact et/ou le séparateur à gouttelettes (TA) est un séparateur à impact,
et le procédé est **caractérisé par** au moins une des caractéristiques suivantes a) et b) :
a) la surface d'arrivée d'écoulement (52) du dispositif de guidage d'écoulement (SLE) est dimensionnée afin de loger globalement entièrement le jet de pulvérisation de produits d'élimination et
b) la surface d'arrivée d'écoulement (53) séparateur par gouttelettes (TA) est conçu de sorte qu'un rebond du produit d'élimination (E) évacué hors de l'appareil d'application (AG) est réduit ou évité.

9. Système d'élimination pour un produit d'élimination, plus particulièrement pour un produit d'élimination de processus de nettoyage et/ou de rinçage d'un appareil d'application (AG) comprenant un dispositif selon l'une des revendications 1 à 7 et une conduite d'évacuation (AL) qui est conçue pour évacuer le produit d'élimination (E) du dispositif de réception (AE) vers un réservoir de collecte (ST).

10. Système d'élimination selon la revendication 9, **caractérisé en ce que** le dispositif de réception (AE) est positionné essentiellement sous une grille (R) ou en dessous du niveau d'une grille du système d'élimination à portée d'un robot de peinture.
